# EUROPÄISCHE PATENTANMELDUNG

(11) **EP 1 988 032 A1**
(43) Veröffentlichungstag der Anmeldung: **05.11.2008**
(21) Anmeldenummer: 08008287.8
(22) Anmeldetag: 30.04.2008
(51) Int. Cl.: B65D 75/62, B65B 9/10, B65B 61/18, A22C 13/00

(54) **Perforationsverfahren für Schutzumhüllungen, Vorrichtung sowie Folienmaterial hierfür**

(30) Priorität: 04.05.2007 DE 102007021045
(71) Anmelder: Poly-clip System GmbH & Co. KG, 60489 Frankfurt am Main (DE)
(72) Erfinder: Hanten, Jürgen, 61231 Bad Nauheim (DE)
(74) Vertreter: Eisenführ, Speiser & Partner

(57) **Zusammenfassung**

Die Erfindung betrifft ein Verfahren zur Bereitstellung einer Vereinfachung zum Entfernen der ein pastöses, granulares, flüssiges oder festes Füllgut zur Bildung eines wurst- oder sackförmigen Produkts umschließenden Schutzumhüllung, insbesondere bei Wurstprodukten, zum Freilegen des Füllguts. Weiterhin ist vorgesehen, dass in die Schutzumhüllung mindestens eine Perforationslinie eingebracht wird, an der die Schutzumhüllung zum Abziehen aufgerissen werden kann.

## Beschreibung

Die Erfindung betrifft ein Verfahren zur Bereitstellung einer Vereinfachung zum Entfernen einer ein viskoses, granulares, flüssiges oder festes Füllgut zur Bildung eines wurst- oder sackförmigen Produkts umschließenden Schutzumhüllung, insbesondere bei Wurstprodukten, zum Freilegen des Füllguts sowie eine Vorrichtung und ein Folienmaterial gemäß den Oberbegriffen der Ansprüche 1, 12 und 13.

Nachfolgend ist mit einem wurst- bzw. sackförmigen Produkt im Sinne der Erfindung jede flexible, mit einem beliebigen flüssigen, viskosen bzw. pastösen, granularen oder festen Füllgut befüllte Schutzumhüllung gemeint, die auf keine bestimmte Form beschränkt ist. Es kann sich dabei also um eine einseitig verschlossene Schutzumhüllung, beispielsweise in Form eines Beutels oder einer Blase, oder eine beidseitig verschlossene Schutzumhüllung, z.B. in Form eines stangenförmigen oder ringförmigen Wurstprodukts handeln.

Derartige Schutzumhüllungen dienen unterschiedlichen Zwecken. Zunächst sollen sie den Transport des darin aufgenommenen Füllguts und die Abgabe dieses Füllguts an dem hierfür vorgesehenen Ort erlauben. Dies gilt beispielsweise für chemische Zusammensetzungen, wie beispielsweise Klebe- oder Dichtmassen. Ist in der Schutzumhüllung ein Nahrungsmittel, wie beispielsweise ein Wurstprodukt aufgenommen, dient die Schutzumhüllung auch dazu, weitere Fertigungsschritte im Zusammenhang mit der Herstellung des Wurstproduktes zu ermöglichen. So müssen beispielsweise Wurstprodukte nach dem Abfüllen des durch Wurstbrät gebildeten Füllguts in die Schutzumhüllung einem Kochvorgang oder einem Reifeprozess unterzogen werden, wobei letzterer zum Beispiel in einer Trocknung in einer bestimmten Atmosphäre bestehen kann. Hierbei kann das Füllgut seinen Aggregatszustand von flüssig oder pastös zu fest ändern. Weiterhin kann die Schutzumhüllung dazu dienen, dem wurst- oder sackförmigen Produkt eine vorbestimmte Form zu verleihen.

Die in der Praxis für die vorstehend erläuterten Zwecke verwendeten Schutzumhüllungen weisen je nach verwendetem Material für die Schutzumhüllung den Nachteil auf, dass sie ohne geeignetes Hilfsmittel, wie beispielsweise einem Messer nicht leicht geöffnet und abgezogen werden können. Von beispielsweise kleinen Portionswürsten ist es bekannt, dass hier häufig eine glatte Schutzumhüllung, zumeist eine glatte Kunststofffolie verwendet wird, deren Oberfläche nur von einem sehr scharfen Messer aufgebrochen werden kann, um das Füllgut, d.h. das Wurstprodukt freizulegen. In verschiedenen Alltagssituationen steht aber oftmals nicht ein ausreichend scharfes oder gar kein Messer zur Verfügung.

Darüber hinaus spielt bei der industriellen Großfertigung von Wurstaufschnittware das Aufreißen der Schutzumhüllung der Wurstprodukte eine entscheidende Rolle. Hier kommen speziell auf die Größe, Form und Länge der Wurst abgestimmte Maschinen zum Einsatz, die in einem sehr aufwendigen Prozess die Schutzumhüllung von dem jeweiligen Wurstfüllgut lösen. Im Falle von in Größe, Form und Länge variierender Wurstprodukte ist die Flexibilität daher eher gewährleistet, wenn, wie auch beim Hausgebrauch, die Schutzumhüllung mit einem Messer eingekerbt wird, um ein greifbares Stück Schutzumhüllung freizulegen, an dem beginnend die Schutzumhüllung vom Wurstfüllgut getrennt werden kann. Um aber auch hier die oftmals sehr starren und glatten Kunststoffumhüllungsmaterial einkerben zu können, ist ein hoher Druck mit einem scharfen Messer von Nöten. Dies führt zumeist dazu, dass die Klinge des Messers nicht nur die Schutzumhüllung durchdringt, sondern tiefer in das Wurstfüllgut einschneidet. Gerade bei in Klarsichtfolie verpackter Wurstaufschnittware stellt eine derartige Einkerbung in das Wurstmaterial einen optischen Mangel dar.

In dem US-Patent 3,528,601 wird ein Verfahren vorgeschlagen, bei dem ein Aufreißstreifen in Umfangsrichtung des Wurstprodukts auf der Oberfläche der Schutzumhüllung aufgebracht wird. Ein außen aufzubringender Streifen ist zwar einfach in beliebigen Abständen entlang der Endlos-Schutzumhüllung zu befestigen. Jedoch besteht hierbei unabhängig von dem genauen Aufbringungsort des Aufreißstreifens die Gefahr, dass nur ein Teil der Schutzumhüllung durch das Aufreißen des Streifens entfernt wird. Der verbleibende Rest muss dann mühselig zum vollständigen Freilegen des Füllguts unter Zuhilfenahme beispielsweise eines Messers von diesem entfernt werden. Das Aufbringen eines derartigen Aufreißstreifens bedeutet somit einen erhöhten Produktionsaufwand für die Schutzumhüllung sowie auch eine erhöhte Fehleranfälligkeit und damit eine Verminderung der Produktionsgeschwindigkeit. Darüber hinaus kann ein auf der Oberfläche der Schutzumhüllung aufgebrachter Streifen z.B. beim Transport einen Schaden erleiden, ggf. abreißen oder, die Schutzumhüllung frühzeitig einreißen, was final zum Verderb des Füllguts führt.

Schließlich kann ein derartiger Aufreißstreifen nur bei einlagigem Folienmaterial verwendet werden. Bei mehrlagigem Material besteht die Gefahr, dass beim Aufreißen der Schutzumhüllung mittels des Aufreißstreifens nur die oberste Lage des mehrlagigen Folienmaterials abgelöst wird.

Aufgabe der vorliegenden Erfindung ist es, ein Verfahren zum Bereitstellen einer Erleichterung zum Entfernen von Schutzumhüllungen von wurst- oder sackförmigen Produkten, insbesondere bei Wurstprodukten, vorzuschlagen, das es ermöglicht, die Schutzumhüllung ohne weitere Hilfsmittel zu öffnen und zu entfernen, um somit das Füllgut freizulegen. Darüber hinaus ist es Aufgabe der Erfindung eine hierfür geeignete Vorrichtung sowie ein Folienmaterial bereitzustellen.

Die vorstehende Aufgabe wird hinsichtlich des Verfahrens durch die Merkmale des Anspruchs 1 gelöst. In den sich darin anschließenden Ansprüchen 2 bis 11 finden sich vorteilhafte Ausgestaltungen hierzu.

Durch das Einbringen mindestens einer Perforationslinie in die Schutzumhüllung, an der die Schutzumhüllung zum Abziehen aufgerissen werden kann, wird auf einfache Weise eine Möglichkeit bereitgestellt, durch die die Schutzumhüllung zum Freilegen des Füllgutes entfernt werden kann. Hierfür ist keinerlei Hilfsmittel notwendig, so dass die Schutzumhüllung an jedem beliebigen Ort und zu jedem beliebigen Zeitpunkt entfernt werden kann. Die Perforationslinie bildet dabei kleine Sollbruchstellen in Gestalt der Perforationslöcher, entlang derer die Schutzumhüllung aufgerissen werden kann.

Die mindestens eine Perforationslinie kann in beliebiger Ausrichtung in die Schutzumhüllung des wurst- oder sackförmigen Produkts eingebracht werden. So ist es beispielsweise möglich, dass die mindestens eine Perforationslinie zumindest annährend parallel zu der Mittellängsachse des wurst- oder sackförmigen Produkts wenigstens über einen Abschnitt in die Schutzumhüllung eingebracht wird. Dabei kann sich die Perforationslinie nur über einen oder mehrere beabstandet zueinander angeordnete Abschnitte der Schutzumhüllung parallel zu der Mittellängsachse erstrecken. Da das Material für die Schutzumhüllung in der Regel aus Kunststoff ist, der eine gewisse Steifigkeit aufweist, ist bereits durch eine kurze Perforationslinie gewährleistet, dass die Schutzumhüllung an deren Ende entlang der Zugrichtung weiter aufreißt und das Füllgut freilegt. Ein sehr sicheres Entfernen der Schutzumhüllung lässt sich dadurch erreichen; dass die mindestens eine zumindest annährend parallel zu der Mittellängsachse des wurst- oder sackförmigen Produkts verlaufende Perforationslinie zumindest annährend über die gesamte axiale Länge der Schutzumhüllung eingebracht wird.

Neben einer Anordnung der Perforationslinie zumindest annährend parallel zu der Mittellängsachse des wurst- bzw. sackförmigen Produkts kann die mindestens eine Perforationslinie quer zur Mittellängsachse des wurst- oder sackförmigen Produkts in die Schutzumhüllung eingebracht werden. Dabei kann sich die Perforationslinie in einem Winkel von zumindest annährend 90° zu der Mittellängsachse des wurst- oder sackförmigen Produkts in Umfangsrichtung der Schutzumhüllung oder in einem hiervon abweichenden Winkel erstrecken.

Im Fall des Verlaufs der Perforationslinie im Wesentlichen senkrecht zu der Mittellängsachse des wurst- bzw. sackförmigen Produkts ist es vorteilhaft, wenn die mindestens eine zumindest annährend senkrecht zu der Mittellängsachse des wurst- oder sackförmigen Produkts verlaufende Perforationslinie zumindest annährend über den gesamten Umfang der Schutzumhüllung eingebracht wird. Dies kann insbesondere für kleinere wurst- bzw. sackförmige Produkte von Vorteil sein, die nur portionsweise freigelegt werden sollen, z.B. bei unmittelbaren Gebrauch. Somit kann, wenn die Perforationslinie sich beispielsweise im oberen Drittel der Wurst befindet, die Schutzumhüllung eben dieses Stückes entfernt werden, und ggf., falls ein darüber hinaus gehender Verbrauch erwünscht ist, durch Drücken des Füllgutes vom noch verschlossenen Ende des wurst- bzw. sackförmigen Produkts her, weiteres Füllgut durch die Schutzumhüllung in Richtung des freiliegenden Endes geschoben werden. So bleibt gewährleistet, dass der Teil, der in der Schutzumhüllung verbleibt, und nicht sogleich verzehrt werden soll, nicht in Kontakt mit den Fingern oder großflächig mit der Umgebung in Berührung kommt, wodurch der Übertrag von Keimen, der zum Verderb des Füllgutes führen kann, vermieden wird.

Verläuft die Perforationslinie in einem spitzen Winkel zu der Mittellängsachse des wurst- bzw. sackförmigen Produkts kann die Perforationslinie beispielsweise auch spiralförmig entlang des Umfangs des wurst- bzw. sackförmigen Produkts abschnittsweise oder vollständig eingebracht werden. Hierdurch ergibt sich die Möglichkeit, durch ein leichtes Gegeneinanderdrehen an einer Stelle der Oberfläche der Schutzumhüllung, das Aufspringen der Schutzumhüllung zu erzeugen und damit die Freilegung des kompletten Füllgutes zu erwirken. Erstreckt sich dabei die Perforationslinie von einem Ende des wurst- bzw. sackförmigen Produkts bis zum anderen, so kann auch ohne das Abtrennen der Enden das wurst- bzw. sackförmige Produkt komplett freigelegt werden.

Ein besonders leichtes und insbesondere vollständiges Entfernen der Schutzumhüllung lässt sich dadurch erreichen, wenn in die Schutzumhüllung mindestens zwei Perforationslinien eingebracht werden. Dabei können die beiden Perforationslinien zumindest annährend parallel zueinander verlaufend in die Schutzumhüllung eingebracht werden. Ist der Abstand der mindestens zwei Perforationslinien um ein Vielfaches kleiner als der Querschnitt des wurst- oder sackförmigen Produkts, lässt sich zunächst ein Streifen der Schutzumhüllung und anschließend die restliche Schutzumhüllung entfernen. Grundsätzlich ist es aber auch möglich, wenn die beiden Perforationslinien in einem Winkel zueinander verlaufend in die Schutzumhüllung eingebracht werden, um beispielsweise ein reißverschlussartiges Aufziehen der Schutzumhüllung zu erreichen.

Die mindestens eine Perforationslinie kann sowohl vor als auch nach wenigstens einem weiteren sich dem Füllvorgang anschließenden Verarbeitungsschritt des wurst- oder sackförmigen Produkts in die Schutzumhüllung eingebracht werden. Handelt es sich bei dem Füllgut um Wurstbrät, kann es sich bei dem weiteren Verarbeitungsschritt um einen Koch- oder Reifevorgang handeln. Wird die mindestens eine Perforationslinie direkt nach dem Befüllen der Schutzumhüllung und vor dem Kochvorgang eingebracht, ist die Gefahr des Platzens durch den Einstich in die prall gefüllte Schutzumhüllung gebannt. Ein weiterer Vorteil ergibt sich dabei unabhängig von dem Füllgut und der Art des weiteren Verarbeitungsschritt dadurch, dass die wurst- bzw. sackförmigen Produkte direkt nach dem Füllvorgang und / oder einem anderen Verarbeitungsschritt, wie einem Kochvorgang immer noch auf einer Fördervorrichtung aufgereiht sein können, so dass sie auf einfache Weise einer weiteren Präparationsstation, also einer Perforationseinheit, zugeführt werden können.

Soll die mindestens eine Perforationslinie erst nach dem weiteren Verarbeitungsschritt, beispielsweise dem Koch- bzw. Reifeprozess bei Wurstprodukten, in die Schutzumhüllung eingebracht werden, müssen die gekochten und gereiften Würste erst wieder aus dem Kochschrank einer entsprechenden Perforationsmaschine zugeführt werden. Dies kostet sowohl Zeit als auch einen erheblichen maschinellen Aufwand. Dennoch kann es bevorzugt sein, die Perforationslinie nach dem weiteren Verarbeitungsschritt, d.h. beispielsweise dem Koch- bzw. Reifeprozess bei Wurstprodukten, in die Schutzumhüllung einzubringen. Der Vorteil kann sich daraus ergeben, dass die Perforationslöcher in eine gestraffte Schutzumhüllung leichter aufgebracht werden können als auf eine noch nachgiebige Schutzumhüllung durch ein noch nicht strukturgebildetes Füllgut. Bevorzugt wird deshalb nach dem weiteren Verarbeitungsschritt, d.h. beispielsweise dem Koch- bzw. Reifeprozess, die Perforationslinie vorzugsweise nach dem Abkühlen der fertiggestellten wurst- bzw. sackförmigen Produkte eingebracht, wenn ein Platzen der Schutzumhüllung beim Aufbringen der Perforationslinie nicht mehr zu befürchten ist.

Im Fall des Einbringens der wenigstens einen Perforationslinie in die Schutzumhüllung nach dem Entfernen mindestens eines Endes des sack- bzw. wurstförmigen Produkts, beispielsweise dem Wurstzipfel bei einem Wurstprodukt, liegt das zu greifende, perforierte Ende frei an der Oberfläche der Wurst, wodurch die Handhabe beim Einreißen und Entfernen der Schutzumhüllung vereinfacht ist.

Um ein einfaches Aufreißen entlang der Perforationslinie(n) zu gewährleisten, muss der Abstand der Löcher sorgfältig ausgewählt sein. Im Fall eines zu kurzen Abstandes, kann es, insbesondere bei Druckeinwirkung von Außen, zu einem vorzeitigen Aufreißen entlang der Perforationslinie kommen, was zu einem unerwünschten frühzeitigen Verderb des Wurstprodukts führen kann. Ist die Beabstandung der Perforationslöcher zu groß, ist ein einfaches, sauberes Aufreißen entlang der vorgegebenen Richtung oftmals nicht bzw. nur unter erheblicher Zugkraft möglich. Der Abstand der Perforationslöcher ist dann optimal, wenn ein Aufreißen erst durch Zug am gewünschten Ende erzielt werden kann. Ein bevorzugter Bereich für den Abstand kann 0,3 mm bis 5 mm betragen.

Ebenso wie der Abstand der Perforationslöcher ist auch deren Größe von entscheidender Bedeutung. Die Perforationslöcher müssen so klein sein, dass das Füllgut nicht durch die Löcher freigelegt wird bzw. durch diese austreten kann, und in der Wurst keine sichtbaren Spuren hinterlässt. Dies ist zum einen für die Haltbarkeit der wurst- bzw. sackförmigen Produkte von entscheidender Bedeutung. Zum anderen aber auch bei dem Fall, dass die Perforationslinie(n) nach dem Füllvorgang und noch vor einem weiteren Verarbeitungsschritt, beispielsweise einem Koch- bzw. Reifeprozess bei Wurstprodukten, aufgebracht werden. In diesem Fall muss nämlich gewährleistet sein, dass kein Füllgut aus den Perforationslöchern austreten kann, so dass das wurst- bzw. sackförmige Produkt seine gewünschten Eigenschaften behält. Andererseits muss aber durch eine gewisse Größe der Perforationslöcher das einfache und sichere Aufreißen entlang der Linie gesichert sein. Je nach Füllgut und Zubereitung bzw. Zeitpunkt der Perforation, muss die Größe der aufzubringenden Perforationslöcher angepasst werden.

Hinsichtlich der Vorrichtung wir die vorstehende Aufgabe durch die Merkmale des Anspruchs 12 gelöst. Insbesondere wird eine Vorrichtung zum Herstellen von ein viskoses bzw. pastöses, granulares oder flüssiges Füllgut aufnehmende wurst- bzw. sackförmige Produkten, insbesondere von Wurstprodukten, vorgeschlagen, wobei das Füllgut von einer Schutzumhüllung umschlossen ist und wobei die Vorrichtung enthält: ein Füllrohr, durch welches das Füllgut zuführbar ist, ein auf dem Füllrohr angeordneter Vorrat der Schutzumhüllung und eine stromabwärts der Mündung des Füllrohrs angeordnete Verschließ- und Trenneinrichtung zum Anbringen von Verschlusselementen an der Schutzumhüllung und zum Abtrennen der Schutzumhüllung eines fertiggestellten Produkts von dem Vorrat an Schutzumhüllung. Weiterhin ist vorgesehen, dass stromabwärts der Verschließ- und Trenneinrichtung eine Einrichtung zum Einbringen wenigstens einer Perforationslinie in die Schutzumhüllung des fertiggestellten Produkts entsprechend dem vorstehend erläuterten Verfahren zum Bereitstellen einer Vereinfachung zum Entfernen der Schutzumhüllung vorgesehen ist. Die Perforationseinrichtung kann sich dabei unmittelbar an die Herstellvorrichtung anschließen oder es kann eine oder mehrere weitere Verarbeitungseinrichtung, wie beispielsweise eine Kocheinrichtung bei Wurstprodukten vorgesehen sein, denen die Perforationseinrichtung folgt.

Wird die Schutzumhüllung erst in der Vorrichtung zum Herstellen der wurst- bzw. sackförmigen Produkte zu einem Schlauch geformt, besteht auch die Möglichkeit, dass die Perforationseinrichtung auch stromaufwärts der Verschließ- und Trenneinrichtung bzw. stromaufwärts des Füllrohres angeordnet ist.

Als Vorrichtung zum Aufbringen einer Perforationslinie können alle gängigen Perforationseinrichtungen zur Anwendung kommen. Zum Beispiel ist es möglich, die abgefüllten, wurst- bzw. sackförmigen Produkte auf einem Förderband unter einem sich drehenden Rad mit beabstandeten Nadeln oder kleinen Messerspitzen hindurch zu führen, die dann die Schutzumhüllung perforieren. Je nach Ausführungsform der Perforationslochgröße und der Beabstandung der Perforationslöcher voneinander kann der eine oder andere Perforationsmaschinentyp bevorzugt sein. Neben diesen "mechanischen" Perforationseinrichtungen besteht auch die Möglichkeit, eine Laserperforationseinheit vorzusehen. Dort werden die Perforationslöcher mittels eines Laserstrahls entsprechender Größe hergestellt. Diese Vorgehensweise ist vorteilhaft, da hier eine mechanische Belastung des Folienmaterials vermieden wird.

Wie bereits vorstehend dargelegt worden ist, besteht eine bevorzugte Ausgestaltung des erfindungsgemäßen Verfahrens darin, dass die mindestens eine Perforationslinie nach einem weiteren Bearbeitungsschritt, der sich an den Füllvorgang anschließt, eingebracht wird. Generell kann gesagt werden, dass das Einbringen der Perforationslinie am Ende des Herstellvorganges des wurst- bzw. sackförmigen Produktes folgen kann. Ist die Perforationslinie insbesondere in diesem Fall, aber auch in jedem anderen Fall, in die Schutzumhüllung eingebracht worden, so kann diese Schutzumhüllung entlang der Perforationslinie aufgebrochen und von dem Füllgut des wurst- bzw. sackförmigen Produkts beispielsweise von Hand abgezogen werden.

Ebenso ist es aber auch möglich, eine hierfür eigens vorgesehene Vorrichtung einzusetzen. Diese Vorrichtung besitzt wenigstens Mittel zum Aufbrechen der Schutzumhüllung entlang der mindestens einen Perforationslinie, Mittel zum Ergreifen der durch das Aufbrechen der Schutzumhüllung entlang der Perforationslinie abstehenden Kanten und / oder Ecken der Schutzumhüllung und weiterhin Mittel zum gleichmäßigen Abziehen der so erfassten Schutzumhüllung.

Das Mittel zum Aufbrechen der Schutzumhüllung entlang der Perforationslinie kann dabei unterschiedlich gestaltet sein. So besteht zum Einen die Möglichkeit, dass es sich hierbei um ein Laufrad handelt, welches an seiner Außenumfangsfläche eine spitz zulaufende Kante aufweist, die im spitzen Bereich aber nicht scharfkantig ausgebildet ist. Mit anderen Worten weist dieses Laufrad einen dreiecksförmigen Querschnitt mit radial nach außen weisender Dreiecksspitze auf. Ebenso besteht die Möglichkeit, dass Mittel zum Aufbrechen der Schutzumhüllung entlang der Perforationslinie durch ein langgestrecktes keilförmig ausgestaltetes Öffnungselement ausgebildet sind. Beiden Fällen ist gemeinsam, dass hierdurch zwar die Schutzumhüllung entlang der Perforationslinie aufgebrochen werden kann, jedoch eine Schädigung des Füllgutes, sei es nun in granularer, pastöser, flüssiger oder fester Form vorhanden, vermieden wird.

Das Mittel zum Ergreifen der entlang der aufgebrochenen Perforationslinie nach außen abstehenden Längskanten bzw. Ecken der Schutzumhüllung können beispielsweise kleine zangenförmige Elemente sein, welche mittels einer Hydraulik, die das Mittel zum Abziehen der Schutzumhüllung dann bilden kann, in Längsrichtung des wurst- bzw. sackförmigen Produktes verfahrbar sind. Diese zangenförmigen Elemente können dabei reversibel in eine Schließstellung oder eine Öffnungsstellung gebracht werden, um die abgezogene Schutzumhüllung über einem Aufnahmebehälter abzuwerfen. Alternativ oder ergänzend kann vorgesehen werden, dass kein separates Aufbrechen der Schutzumhüllung entlang der Perforationslinie erfolgt. Vielmehr wird die Schutzumhüllung beim Aufbrechen entlang der Perforationslinie zeitgleich abgezogen. Vorteilhafterweise wird hierzu die Schutzumhüllung an einer Stelle ergreifbar gemacht, z. B. durch Abschneiden eines Wurstendes oder durch Aufbrechen der Schutzumhüllung über wenige Perforationslöcher.

Selbstverständlich kann die Vorrichtung zum Einbringen der Perforationslöcher und die Vorrichtung zum Aufbrechen der Schutzumhüllung entlang der Perforationslinie und zum Abziehen der Schutzumhüllung in einer Maschineneinheit zusammengefasst sein. Hierbei wird das wurst- bzw. sackförmige Produkt in diese Maschineneinheit mittels beispielsweise Förderbändern, Förderketten usw. eingebracht, in einer Stellung mit entsprechenden bekannten Mitteln fixiert, anschließend die mindestens eine Perforationslinie durch die Perforationseinrichtung in die Schutzumhüllung eingebracht und anschließend die Schutzumhüllung entlang der Perforationslinie aufgebrochen und von dem Füllgut abgezogen werden. Dies ist, wie bereits erwähnt, besonders vorteilhaft, wenn das wurst- bzw. sackförmige Produkt fertiggestellt ist, insbesondere bei Wurstprodukten, deren ursprüngliche granulares bis viskoses oder flüssiges Füllgut durch einen oder mehrere weitere Bearbeitungsvorgänge fest geworden ist.

Hinsichtlich des Folienmaterials wird die vorstehende Aufgabe durch die Merkmale des Anspruchs 13 gelöst. In den sich daran anschließenden Ansprüchen 14 und 15 finden sich vorteilhafte Ausgestaltungen.

Insbesondere wird ein Folienmaterial zur Verwendung als ein pastöses, granulares oder flüssiges bzw. viskoses Füllgut zur Bildung eines wurst- oder sackförmigen Produkts umschließende Schutzumhüllung vorgeschlagen, bei dem in die Schutzumhüllung mindestens eine Perforationslinie eingebracht ist. Bereits bei Herstellung der Folie, die hinsichtlich ihrer Zusammensetzung nicht beschränkt ist, und je nach Wunsch ausgewählt werden kann, können mittels geeigneter Vorrichtungen zur Perforation, wie sie bereits vorbekannt sind, die mindestens eine Perforationslinie eingebracht werden. Derartig vorperforierte Folienmaterialien können dann, wie in einem analog dem oben beschriebenen Prozess, zu Schutzumhüllungen geformt und letztendlich auch mit Füllgut gefüllt werden.

Ein Vorteil eines so hergestellten Folienmaterials liegt darin, dass insbesondere im Fall von später entlang der Mittellängsachse des wurst- bzw. sackförmigen Produkts verlaufenden Perforationslinien, ein derartiges Folienmaterial für jegliche Größe, Form und Gestalt eines wurst- bzw. sackförmigen Produkts verwendet werden kann, ohne dass die Perforationsmaschinen auf den Typ des Produkts eingestellt werden müssen. Die Flexibilität zur Erzeugung unterschiedlich geformter Wurstwaren bleibt somit erhalten.

Auch hier können in die Schutzumhüllung mindestens zwei Perforationslinien eingebracht werden.

Die in das Folienmaterial aufgebrachten Perforationslöcher sollten dabei vorzugsweise einen Durchmesser von etwa 0,01 bis 3 mm aufweisen. Um oben genannten Nachteil vom Austritt von Füllgut oder verfrühtes Einreißen der Schutzumhüllung zu vermeiden, ist eine Perforationslochgröße von größer 3 mm nur eingeschränkt bevorzugt.

Weitere vorteilhafte Ausgestaltungen sowie ein Ausführungsbeispiel werden nachstehend im Zusammenhang mit den beigefügten Zeichnungsfiguren erläutert. In diesem Zusammenhang ist darauf hinzuweisen, dass sich die in der Beschreibung des Ausführungsbeispiels verwendeten Begriffe "links", "rechts", "oben" und "unten" auf die Zeichnungsfiguren in einer Ausrichtung mit normal lesbaren Figurenbezeichnungen und Bezugszeichen beziehen. Hierbei ist:
- Fig. 1:: eine schematische Ansicht einer Fertigungslinie für Wurstprodukte als Beispiel für eine Vorrichtung zum Herstellen von wurst- oder sackförmigen Produkten, bei der eine erfindungsgemäße Einrichtung zum Einbringen einer Perforationslinie eingesetzt ist;
- Fig. 2:: eine Ansicht eines wurst- bzw. sackförmiges Produkt mit parallel zu der Mittellängsachse des Produktes verlaufenden Perforationslinien; und
- Fig. 3:: eine Ansicht eines wurst- bzw. sackförmigen Produktes mit einer spiralförmig am Umfang des Produktes umlaufenden Perforationslinie.

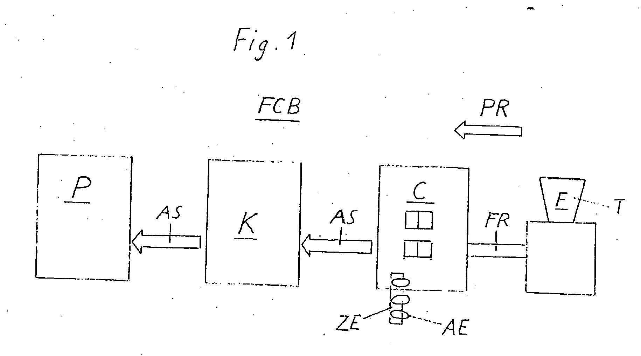

In Fig. 1 ist eine Fertigungslinie FCB für Wurstprodukte als Beispiel für eine Vorrichtung zum Herstellen von wurst- oder sackförmigen Produkten in ihrem prinzipiellen Aufbau schematisch wiedergegeben. Dieser Aufbau wird nachstehend in seinen Grundstrukturen erläutert.

Die Fertigungslinie FCB dient zur Herstellung von nicht näher dargestellten Wurstprodukten. Selbstverständlich kann die Fertigungslinie FCB zur Herstellung anderer wurstförmiger Produkt, wie beispielsweise wurstförmig portionierten Dichtmassen und dgl., eingesetzt werden. Generell kann die Fertigungslinie FCB für jedes fließfähige Füllgut, d.h. also auch Granulat, Flüssigkeiten usw. verarbeiten, das in ein Schutzumhüllungsmaterial einfüllbar und als wurstförmiges Produkt portionierbar ist.

Wie aus Fig. 1 entnehmbar ist, setzt sich die Fertigungslinie FCB aus einer Füllmaschine F, einer Clipmaschine C , einer Kocheinheit K und einer Perforationseinrichtung P zusammen, die entsprechend ihrer Funktion in dieser Reihenfolge, die der Produktionsablaufrichtung PR der Fertigungslinie FCB entspricht, nacheinander angeordnet sind. Dabei wird aus der Füllmaschine F ein dort einem Fülltrichter T zugeführtes Füllgut, hier Wurstbrät, diskontinuierlich oder kontinuierlich mittels einer geeigneten Fördereinrichtung, wie beispielsweise einer Förderpumpe, der Clipmaschine C zugeführt. In der Clipmaschine C wird das Wurstbrät in ein in Fig. 1 ebenfalls nicht näher dargestelltes Schutzumhüllungsmaterial eingefüllt und zu einzelnen Wurstprodukten portioniert. Anschließend wird das so hergestellte Wurstprodukt W aus der Clipmaschine C über eine erste Austragstrecke AS der Clipmaschine C zu der Kocheinheit K ausgetragen. In der Kocheinheit K wird das Wurstprodukt gekocht, wodurch sich das ursprünglich pastöse Füllgut verfestigt. Anschließend wird das nunmehr fertiggestellte Wurstprodukt entlang einer weiteren, zweiten Austragsstrecke AS zu der Perforationseinrichtung P ausgetragen. Entlang der ersten und/ oder der zweiten Austragsstrecke AS können sich noch weitere, nicht näher dargestellte Einrichtungen für weitere Bearbeitungsschritte an dem Wurstprodukt anschließen. Ebenfalls ist es möglich, dass sich in Produktionsablaufrichtung PR noch weitere Einrichtungen für ergänzende Bearbeitungsschritte für die Wurstprodukte anschließen.

Die Clipmaschine C verfügt über ein Füllrohr FR zum Zuführen des Füllguts aus der Füllmaschine F und ist über dieses mit der Füllmaschine F verbunden. Das Füllrohr FR kann dabei auch als Speicher für den Vorrat an Schutzumhüllungsmaterial dienen, der in der Clipmaschine C verarbeitet wird. Des weiteren verfügt die Clipmaschine C über eine vorzugsweise durch ein Förderband gebildete Zuführeinrichtung ZE für flexible Aufhängeelemente AE. Die Aufhängeelemente AE, die vorzugsweise durch Fadenschlaufen gebildet sind, liegen dabei auf einem einseitig mit einem Kleber beschichteten Trägerband, von dem sie in der Clipmaschine C einzeln durch eine nicht näher dargestellte Matrize eines Clipsetz- und Clipschließwerkzeugs abgezogen werden. Wie aus Fig. 1 entnommen werden kann, ist die Zuführeinrichtung ZE für die Aufhängeelemente AE so an der Clipmaschine C im Bereich der Clipsetz- und Clipverschließwerkzeuge angeordnet, dass ihre Förderrichtung zumindest annährend senkrecht zur Produktionsablaufrichtung PR in der erfindungsgemäßen Fertigungslinie FCB verläuft.

In der Clipmaschine C wird das schlauchförmige Schutzumhüllungsmaterial mit dem Wurstbrät befüllt und durch Setzen sowie Verschließen von Clips an entsprechenden Stellen in bekannter Weise zu Wurstprodukten portioniert. Dabei wird gleichzeitig an einem Ende jedes wurstförmigen Produkts ein flexibles Aufhängeelement AE befestigt, das von der Zuführeinrichtung ZE in das Clipsetz- und Clipverschließwerkzeug der Clipmaschine C eingelegt wurde. Anschließend wird das Wurstprodukt auf der ersten Austragstrecke AS aus der Clipmaschine C ausgetragen. Die erste Austragstrecke AS der Clipmaschine C endet dabei an der Kocheinheit K. Nach dem Kochvorgang wird das nunmehr fertiggestellte Wurstprodukt über die zweite Austragstrecke AS der Perforationseinrichtung P zugeführt.

Es ist noch anzumerken, dass neben der vorstehend beschriebenen Vorgehensweise, an jedem Wurstprodukt ein Aufhängelement AE anzubringen, auch die Möglichkeit besteht, ein Aufhängeelement AE an jedem zweiten, dritten usw. Wurstprodukt anzubringen, wobei dann das Schutzumhüllungsmaterial zwischen dem ersten, zweiten, dritten usw. Wurstprodukt nicht durchtrennt wird. Hierdurch lassen sich Paare bzw. Ketten an Wurstprodukten bilden.

In Produktionsablaufrichtung PR der Fertigungslinie FCB schließt sich an die Clipmaschine C und die Kocheinheit K die Perforationseinrichtung P zum Einbringen mindestens einer Perforationslinie in das Wurstprodukt an. Diese Einrichtung ist in Produktionsablaufrichtung PR stromabwärts der Clipsetz- und Clipverschließwerkzeuge angeordnet. In der Fig. 1 ist diese Einrichtung P lediglich schematisch durch ein Rechteck wiedergegeben. Es können hierfür die unterschiedlichsten Lösungen vorgesehen werden. So ist es beispielsweise möglich, dass die Einrichtung ein oder mehrere sich drehende Räder mit beabstandeten Nadeln oder kleinen Messerspitzen aufweist, unter denen die Wurstprodukte mittels beispielsweise eines Förderbandes hindurch geführt werden. Die Zahl der Räder kann sich dabei nach der Zahl der Perforationslinien richten. Ebenso kann die Einrichtung einen Revolverkopf aufweisen, bei dem an dem Revolver mehrere Räder in unterschiedlicher Zahl und Ausgestaltung angeordnet sind, so dass je nach zu perforierendem Produkt unterschiedliche Perforationsmuster oder unterschiedliche Perforationslöcher mit verschiedenen Perforationslöcherabständen erzeugt werden können. Ebenfalls besteht die Möglichkeit, dass die Einrichtung durch die Nadelreihe, welche im wesentlichen parallel zur Mittellängsachse des Wurstproduktes verläuft gebildet ist. Selbstverständlich können auch hier mehrere Nadelreihen parallel nebeneinander oder beispielsweise auch in einer Richtung quer zur Förderrichtung der Wurstprodukte angeordnet sein. Schließlich kann die Perforationseinrichtung P auch durch eine Laserperforationseinrichtung gebildet sein.

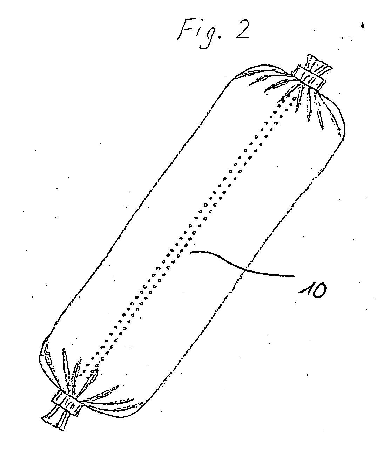

Fig. 2 gibt ein Ausführungsbeispiel eines wurst- bzw. sackförmigen Produktes wieder, bei dem eine erfindungsgemäße Perforationslinie 10 eingebracht ist. Bei diesem Produkt handelt es sich um ein Wurstprodukt, bei dem zwei Perforationslinien 10, welche im wesentlichen parallel zur Mittellängsachse des Wurstproduktes parallel zueinander verlaufend eingebracht sind. Der Abstand der beiden Perforationslinien 10 ist dabei, wie dies aus Fig. 2 ohne weiteres ersichtlich ist, sehr viel kleiner als der Umfang des Wurstproduktes. Wie ebenfalls aus der Fig. 2 entnehmbar ist, erstrecken sich die Perforationslinien 10 bis knapp vor die Enden des Wurstproduktes, so dass nach deren Abschneiden der Anfang der Perforationslinien 10 und insbesondere der Streifen, der durch die beiden Perforationslinien begrenzt ist, ergriffen und von dem Wurstprodukt abgezogen werden kann.

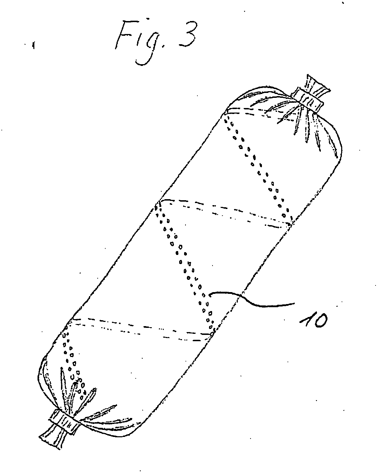

In Fig. 3 ist ein weiteres Beispiel eines Wurstproduktes mit einer doppelten Perforationslinie 10 wiedergegeben, wobei hier die doppelte Perforationslinie 10 spiralförmig entlang des Umfanges des Wurstproduktes verläuft. Das Aufbringen einer derartigen doppelten Perforationslinie kann beispielsweise dadurch geschehen, dass das Wurstprodukt während des Vorschubes entlang eines Förderbandes gleichmäßig gedreht wird.

An die Perforationseinrichtung P kann eine Einrichtung zum Abziehen bzw. Ablösen der Schutzumhüllung vorgesehen sein. Selbstverständlich kann eine derartige Einrichtung auch integrativer Bestandteil der Perforationseinrichtung P sein. Hierbei wird, wie dies bereits vorstehend erläutert worden ist, nach dem Einbringen der Perforationslinie bzw. der Perforationslinien in das wurst- bzw. sackförmige Produkt die Schutzumhüllung dieses Produktes entlang der Perforationslinie aufgebrochen. Anschließend werden durch das Aufbrechen der Schutzumhüllung entlang der Perforationslinie(n) durch weitere Mittel die nach außen offenstehenden Kanten bzw. Ecken der Schutzumhüllung ergriffen und durch eine vorzugsweise lineare Verfahrbewegung dieser Greifmittel entlang der Längsachse des wurst- bzw. sackförmigen Produktes abgezogen. Ist die mindestens eine Perforationslinie spiralförmig auf dem wurst- bzw. sackförmigen Produkt aufgebracht, so kann das Aufbrechen der Schutzumhüllung entlang der mindestens einen Perforationslinie und das Abziehen der so aufgebrochenen Schutzumhüllung von dem Füllgut entweder durch spiralförmiges Drehen des Aufbrechwerkzeuges bzw. des Greifwerkzeuges oder aber durch Drehen des wurst- bzw. sackförmigen Produktes bei gleichzeitigem linearen Verfahren der Greifwerkzeuge erfolgen. Schließlich können in einer derartigen Einrichtung zusätzlich oder alternativ Mittel zum Abschneiden wenigstens eines Endes des wurst- bzw. sackförmigen Produktes vorgesehen sein, um so unmittelbar benachbart der mindestens einen Perforationslinie die in Richtung des abgeschnittenen Endes des wurst- bzw. sackförmigen Produktes weisende Kante der Schutzumhüllung (Stirnkante) zu ergreifen und die Schutzumhüllung durch die ergriffenen Ecken entlang der mindestens einen Perforationslinie aufzubrechen und dabei gleichzeitig die Schutzumhüllung von dem Füllgut, sei es pastös, granular, flüssig oder fest abzuziehen. Schließlich weist eine derartige Einrichtung noch eine Speichermöglichkeit für abgezogene Schutzumhüllungen auf.

Hinsichtlich der Größe und des Abstandes der Perforationslöcher zueinander ist noch zu bemerken, dass diese einen Durchmesser von ca. 0,01 bis 3 mm aufweisen können. Der Abstand der Perforationslöcher zueinander sollte von 0,3 mm bis 5 mm betragen.

## Patentansprüche

1. Verfahren zur Bereitstellung einer Vereinfachung zum Entfernen der ein pastöses, granulares, flüssiges oder festes Füllgut zur Bildung eines wurst- oder sackförmigen Produkts umschließenden Schutzumhüllung, insbesondere bei Wurstprodukten, zum Freilegen des Füllguts, mit den Schritten:
- Einfüllen des Füllguts in die Schutzumhüllung
- Verschließen der Schutzumhüllung
- Trennen des fertiggestellten wurst- oder sackförmigen Produkts vom übrigen Vorrat an Schutzumhüllung
**dadurch gekennzeichnet, dass** nach dem Verschließen der Schutzumhüllung und dem Trennen des fertiggestellten wurst- oder sackförmigen Produkts vom übrigen Vorrat an Schutzumhüllung mindestens eine Perforationslinie in die Schutzumhüllung eingebracht wird, an der die Schutzumhüllung zum Abziehen aufgerissen werden kann.

2. Verfahren nach Anspruch 1,
**dadurch gekennzeichnet, dass** die mindestens eine Perforationslinie zumindest annährend parallel zu der Mittellängsachse des wurst- oder sackförmigen Produkts wenigstens über einen Abschnitt in die Schutzumhüllung eingebracht wird.

3. Verfahren nach Anspruch 2,
**dadurch gekennzeichnet, dass** die mindestens eine zumindest annährend parallel zu der Mittellängsachse des wurst- oder sackförmigen Produkts verlaufenden Perforationslinie zumindest annährend über die gesamte axiale Länge der Schutzumhüllung eingebracht wird.

4. Verfahren nach Anspruch 1,
**dadurch gekennzeichnet, dass** die mindestens eine Perforationslinie quer zu der Mittellängsachse des wurst- oder sackförmigen Produkts in die Schutzumhüllung eingebracht wird.

5. Verfahren nach Anspruch 4,
**dadurch gekennzeichnet, dass** die mindestens eine zumindest annährend senkrecht zu der Mittellängsachse des wurst- oder sackförmigen Produkts verlaufenden Perforationslinie zumindest annährend über den gesamten Umfang der Schutzumhüllung eingebracht wird

6. Verfahren nach einem der Ansprüche 1 bis 5,
**dadurch gekennzeichnet, dass** in die Schutzumhüllung mindestens zwei Perforationslinien eingebracht werden.

7. Verfahren nach Anspruch 6,
**dadurch gekennzeichnet, dass** die beiden Perforationslinien zumindest annährend parallel zueinander verlaufend in die Schutzumhüllung eingebracht werden.

8. Verfahren nach Anspruch 7,
**dadurch gekennzeichnet, dass** der Abstand der mindestens zwei Perforationslinien um ein Vielfaches kleiner ist als der Querschnitt des wurst- oder sackförmigen Produkts.

9. Verfahren nach Anspruch 6,
**dadurch gekennzeichnet, dass** die beiden Perforationslinien in einem Winkel zueinander verlaufend in die Schutzumhüllung eingebracht werden.

10. Verfahren nach einem der Ansprüche 1 bis 9,
**dadurch gekennzeichnet, dass** die mindestens eine Perforationslinie nach wenigstens einem weiteren sich dem Füllvorgang anschließenden Verarbeitungsschritt des wurst- oder sackförmigen Produkts in die Schutzumhüllung eingebracht wird.

11. Verfahren nach einem der Ansprüche 1 bis 10,
**dadurch gekennzeichnet, dass** das Einbringen der wenigstens einen Perforationslinie in die Schutzumhüllung nach dem Entfernen mindestens eines Endes des sack- bzw. wurstförmigen Produkts erfolgt.

12. Vorrichtung zum Herstellen von ein pastöses, granulares, flüssiges oder festes Füllgut aufnehmende wurst- bzw. sackförmige Produkten, insbesondere von Wurstprodukten, wobei das Füllgut von einer Schutzumhüllung umschlossen ist und wobei die Vorrichtung enthält: ein Füllrohr (FR), durch welches das Füllgut zuführbar ist, ein auf dem Füllrohr (FR) angeordneter Vorrat der Schutzumhüllung und eine stromabwärts der Mündung des Füllrohrs (FR) angeordnete Verschließ- und Trenneinrichtung (C) zum Anbringen mindestens eines Verschlusselements an der Schutzumhüllung und zum Abtrennen der Schutzumhüllung eines fertiggestellten Produkts von dem Vorrat an Schutzumhüllung,
**dadurch gekennzeichnet, dass** stromabwärts der Verschließ- und Trenneinrichtung (C) eine Einrichtung zum Einbringen (P) wenigstens einer Perforationslinie in die Schutzumhüllung des fertiggestellten Produkts entsprechend dem Verfahren nach einem der Ansprüche 1 bis 11 zum Bereitstellen einer Vereinfachung zum Entfernen der Schutzumhüllung vorgesehen ist.

13. Folienmaterial zur Verwendung als Schutzumhüllung von ein pastöses, granulares, flüssiges oder festes Füllgut zur Bildung eines wurst- oder sackförmigen Produkts umschließende Schutzumhüllung, insbesondere bei einem Verfahren nach einem der Ansprüche 1 bis 11,
**dadurch gekennzeichnet, dass** in die Schutzumhüllung mindestens eine Perforationslinie aufgebracht ist.

14. Folienmaterial nach Anspruch 13,
**dadurch gekennzeichnet, dass** in die Schutzumhüllung mindestens zwei Perforationslinien eingebracht sind.

15. Folienmaterial nach Anspruch 13 oder 14,
**dadurch gekennzeichnet, dass** die Perforationslöcher der Schutzumhüllung einen Durchmesser von etwa 0,01 bis 3 mm aufweisen.
